Europäisches Patentamt

European Patent Office

Office européen des brevets

(11) Publication number: **0 139 397**
**A2**

# (12) EUROPEAN PATENT APPLICATION

(21) Application number: **84305749.8**

(22) Date of filing: **22.08.84**

(51) Int. Cl.⁴: **F 16 J 15/32**

(30) Priority: **25.08.83 GB 8322844**

(43) Date of publication of application:
**02.05.85 Bulletin 85/18**

(84) Designated Contracting States:
**AT BE CH DE FR GB IT LI LU NL SE**

(71) Applicant: **FLOTRONICS AG**
**Chamerstrasse 52**
**CH-6300 Zug(CH)**

(72) Inventor: **Melville, John Gregory Emm**
**3 Windlesham Road**
**Shoreham-by-Sea West Sussex(GB)**

(74) Representative: **Brooke-Smith, Fred et al,**
**STEVENS, HEWLETT & PERKINS 5 Quality Court**
**Chancery Lane**
**London WC2A 1HZ(GB)**

(54) **Improvements relating to shaft sealing arrangements.**

(57) A shaft sealing arrangement includes a sealing ring 12 which is made from polytetrafluoroethylene and which has been subjected to toroidal rotation stressing it beyond its elastic limit. The ring is rotated further bringing its total rotation to substantially 90° in an anticlockwise direction and is inserted into a rebate in the shaft housing 11, a rib 16 in the rebate engaging a peripheral groove in the ring to locate the ring axially. The shaft 10 is then passed through the ring. The ring is still resilient and seeks to rotate clockwise, pressing diagonally opposite corners thereof into close sealing engagement with the housing and shaft respectively.

FIG.3

EP 0 139 397 A2

Croydon Printing Company Ltd.

**0139397**

## IMPROVEMENTS RELATING TO SHAFT SEALING ARRANGEMENTS

This invention relates to shaft sealing arrangements and has a particularly useful but not exclusive application in pumps incorporating a rod or shaft which must be sealed to prevent the escape of dangerous or noxious fluids being pumped.

According to this invention there is provided a shaft sealing arrangement comprising a shaft mounted for axial and/or rotational movement in a surrounding housing, and a sealing ring of non circular cross-section located in an annular groove in either the shaft or the surface of the housing radially facing the shaft and forming a seal with a radially facing surface of the housing or the shaft as the case may be, which ring has been toroidally rotated so as to be in a state of strain beyond its instantaneous elastic limit.

Annular articles made from certain plastics materials, notably polytetrafluoroethylene (PTFE), are relatively easily strained beyond their instantaneous elastic limit, i.e. when released will not return to their original shape but take up a new stable shape. However, in their over-strained condition and new shape the articles may retain useful properties of resilience.

The invention will now be described in more detail with reference by way of example to the accompanying drawings in which:

Figures 1 and 2 show a sealing ring for use in an arrangement according to the invention in its original and over-strained conditions respectively.

Figure 3 shows the installation of the over-strained sealing ring of Figure 2 in a sealing arrangement according to the invention, and

Figures 4 to 7 illustrate a method of assembling an arrangement as shown in Figure 3.

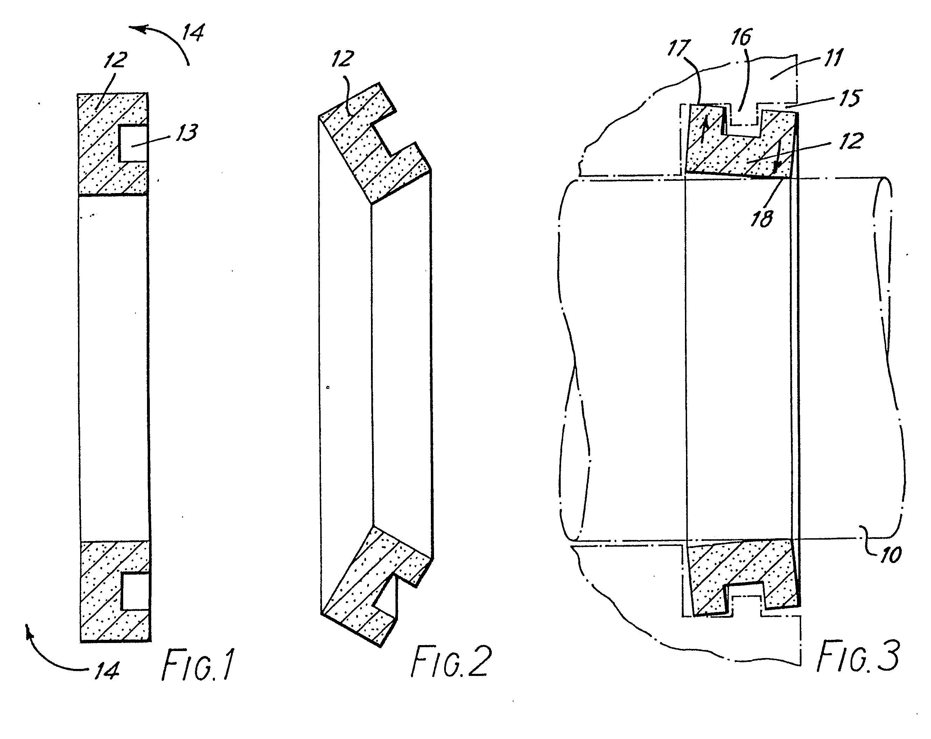

Referring now to Figure 3 of the drawings a shaft-sealing arrangement is shown which is intended for use in a double diaphragm pump such as is described in our Patent Application No. 8309426. The shaft 10 is reciprocated in its housing 11 and in order to prevent leakage of pumped fluid along the shaft from right to left, a sealing arrangement is provided comprising a sealing ring 12 disposed in a peripheral groove in the housing and engaging the surface of the shaft. The sealing ring is in a condition which results from applying toroidal rotation to the ring sufficient to exceed its instantaneous elastic limit. The sealing ring as originally formed is shown in Figure 1. The ring is made from PTFE and has an axially-extending slot 13 formed therein. Toroidal rotation is applied to the ring in the direction indicated by the arrow 14 such that the strains in the material exceed the elastic limit of the material, and the material subsequently relaxes into the new but stable condition of equilibrium illustrated in Figure 2. Subsequently the ring shown in Figure 2 is forced into a counterbore 15 in the housing and a rib 16 in the groove engages in the slot 13 in the ring to locate the ring against disengagement axially from the groove. The shaft 10 is then pressed through the central aperture of the ring. On insertion of the shaft the ring is subjected to further resilient deformation. the ring being rotated into the attitude in which it is shown in Figure 3 but seeking to return to its shape as shown in Figure 2 and thus pressing diagonally opposite corner portions 17, 18 areas of the ring into sealing engagement with the shaft and the wall of the counterbore 15 respectively.

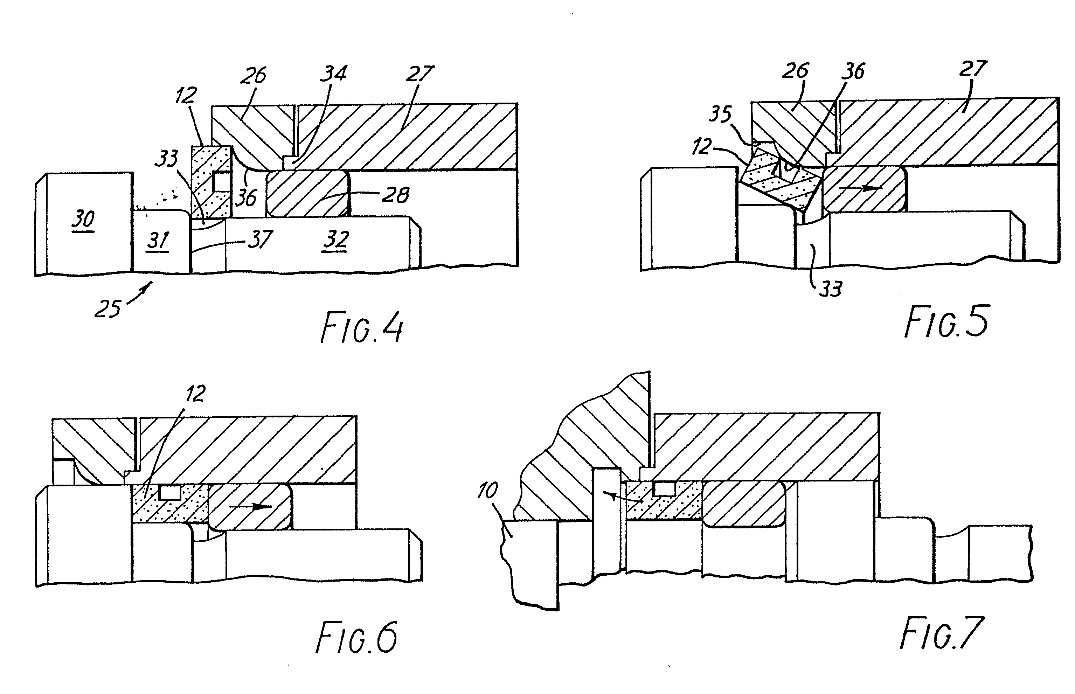

Figures 4 to 7 illustrate one method and apparatus by which the ring 12 is subjected to toroidal rotation to over-strain it and by which at the same time the ring is positioned in the counterbore 15 in the housing. The apparatus comprises a mandrel 25, two annular forming tools 26, 27, and a locating ring 28 which serves to guide the mandrel coaxially within the forming tools 26 and 27. An annular tongue 34 on one end of tool 27 has radial dimensions equal to those of the rib in the groove in the housing and registers in a rebate in the adjacent end of tool 26 to locate the latter. The mandrel has three portions 30, 31, 32 of differing diameters, and the ring in its original form fits on to the end portion 32, but a groove 33 which has an inclined bottom wall and which is axially shorter than the ring is formed between the two portions 31, 32. Locating ring 28 is a sliding fit on end portion 32 of the mandrel, and forming tools 26 and 27 are a sliding fit over locating ring 28 and portion 30, with an internal diameter equal to that of the rib 16 in the groove in the housing. The diameter of the middle portion 31 is substantially equal to that of the shaft. The forming tool 26 has over one end portion 35 thereof an internal diameter enabling it to accommodate the outer diameter of the ring 12 and has a convexly curved internal surface 36 extending from portion 35 to the other axial end of the tool.

The sealing ring is first placed on end portion 32 as shown in Figure 4, so that the groove 33 underlies part of the length of the ring and so that the outer diameter of the ring is accommodated in the end portion 35 of tool 26.    Mandrel 25 is now moved rightward guided by ring 28, as a result of which the ring is subjected to toroidal rotation by the shoulder 37 between portions 31 and 32 of the mandrel and the shoulder between the portions 35 and 36 of the tool 26.    The ring is rotated into the groove 33 as shown in Figure 5 and then on to the middle portion 31 of the mandrel as shown in Figure 6, so that the ring has undergone $90^{o}$ of toroidal rotation.    Rightward movement of the mandrel and ring 12 continues until the ring is fully accommodated within tool 27, the ring being allowed to push locating ring 28 before it.    The mandrel is then withdrawn leftward and reinserted in the right hand end of tool 17, and tool 26 is removed (see Figure 7).    The tongue 34 on tool 27 is now engaged in the end portion of the counterbore 15 in the housing and the mandrel is moved leftward pushing the locating ring 28 and the ring 12 before it to eject the ring 12 into the counterbore, so that its slot 13 engages the rib 16 in the counterbore.    The locating ring 28 and mandrel are then removed and the shaft 10 is pressed into the aperture in the ring 12.

## CLAIMS

1.    A shaft sealing arrangement comprising a shaft mounted for axial and/or rotational movement in a surrounding housing, and a sealing ring of non-circular cross-section located in an annular groove in either the shaft or the surface of the housing radially facing the shaft and forming a seal with a radially facing surface of the housing or the shaft as the case may be, which ring has been toroidally rotated so as to be in a state of strain beyond its instantaneous elastic limit.

2.    A sealing arrangement as claimed in claim 1, wherein the ring is made from a resilient plastics material.

3.    A sealing arrangement as claimed in claim 2 wherein the ring is made from polytetrafluoroethylene.

4.    A sealing arrangement as claimed in any one of the preceding claims, wherein the ring is formed with a circumferentially-extending slot.

5.    A sealing arrangement as claimed in any one of the preceding claims, wherein the ring is of substantially rectangular cross-section.

FIG.1

FIG.2

FIG.3

Fig.5

Fig.7

Fig.4

Fig.6